# EUROPEAN PATENT SPECIFICATION

(11) **EP 2 026 258 B1**
(45) Date of publication and mention of the grant of the patent: **05.01.2011**
(21) Application number: 07113981.0
(22) Date of filing: 08.08.2007
(51) Int. Cl.: G06Q 10/00

(54) **Method for pre-fetching data chunks of an email attachment on a portable electronic device**
Verfahren zum Vorababruf von Datenchunks eines E-Mail-Anhangs auf einem tragbaren elektronischen Gerät
Procédé de pré-extraction de parties de données d'une pièce jointe d'un message électronique sur un dispositif électronique portable

(43) Date of publication of application: 18.02.2009
(73) Proprietor: RESEARCH IN MOTION LIMITED, Waterloo, Ontario N2L 3W8 (CA)
(72) Inventor: Dumitru, Dan, Atlanta, GA Georgia 30328 (US); Arora, Rakesh, Burlington Ontario L7L 6X6 (CA); Stalin, Eshwar, Atlanta GA Georgia 30312-1478 (US)
(74) Representative: MERH-IP Matias Erny Reichl Hoffmann

(56) References cited:
- EP-A- 1 802 055
- US-A1- 2006 047 743
- US-A1- 2006 103 665
- OPEN MOBILE ALLIANCE LTD: "Mobile Email Requirements - Candidate Version 1.0" OMA, 18 October 2005 (2005-10-18), XP002462349
- RESEARCH IN MOTION LTD: "Attachment Service"[Online] 2003, XP002462350 Retrieved from the Internet: URL:www.vodafone.ie/download?id=BBATTACH_S ERVICE_WP.PDF> [retrieved on 2007-12-12]
- LILJEBERG M ET AL: "Mowgli WWW software: improved usability of WWW in mobile WAN environments" GLOBAL TELECOMMUNICATIONS CONFERENCE, 1996. GLOBECOM '96. 'COMMUNICATI ONS: THE KEY TO GLOBAL PROSPERITY LONDON, UK 18-22 NOV. 1996, NEW YORK, NY, USA,IEEE, US, 18 November 1996 (1996-11-18), pages 33-37, XP010220169 ISBN: 978-0-7803-3336-9

## Description

The present disclosure relates generally to portable electronic devices operating on wireless networks, in particular, to a method for receiving email attachments.

It is becoming increasingly popular to send photographs, scanned documents, slide shows, PDF documents and other types of attachments in email messages. Each attachment is provided with a filename and is linked to an email message in a manner that is well known in the art. Often, a single email message may contain multiple attachments.

On portable electronic devices, there is generally a delay between a request to view an attachment by a user and display of the attachment on the display screen of the device. The primary cause of the delay is server processing time; however, network speed is also a contributing factor. The delay can often exceed 20-30 seconds. A shorter waiting period between requesting and viewing an attachment on a portable electronic device is therefore desirable.

One solution to the foregoing is to send an initial data request from the attachment viewer to a server in response to receipt of an email message including the attachment by the portable electronic device, accessing a graph structure representing a map of the attachment from the server, the graph structure having been previously built on the server, reconstructing the graph structure in response to the initial request and encapsulating the graph structure in data having an attachment viewer readable format, the data being stored on the server and sending an initial chunk of the data to the attachment viewer, the initial chunk of the data being stored on the portable electronic device; wherein the initial chunk of the data is received prior to a request to view the attachment being sent to the server.

Since the attachment data is divided into multiple chunks, whenever the user scrolls through the document and reaches a certain character count threshold (before the end of the latest downloaded data chunk), a request for the next available chunk is issued by the attachment viewer to the attachment server. However, the foregoing method prefetches only the initial chunk of data and, due to the size of such data chunks and the complexity of processing the data chunks within the attachment server side, the user continues to wait several seconds before the next chunk data is available for viewing.

An example of the preparation of a DOM structure is shown in US-A-2006/0047743.

### GENERAL

In one aspect there may be provided a method for downloading an attachment to an attachment viewer of a portable electronic device according to independent claim 1.

In another aspect there may be provided a portable electronic device according to independent claim 7.

### BRIEF DESCRIPTION OF THE DRAWINGS

The embodiments will be better understood with reference to the following Figures in which like numerals denote like parts and in which:

Figure 1 is a schematic diagram of a wireless communication system;

Figure 2 is a block diagram of components of a portable electronic device according to an embodiment; and

Figure 3 is a flowchart showing device-side operation of a method for downloading data to an Attachment Viewer of the portable electronic device of Figure 2; and

Figure 4 is a flowchart showing server-side operation of a method for downloading data to an Attachment Viewer of the portable electronic device of Figure 2.

### DESCRIPTION OF PREFERRED EMBODIMENTS

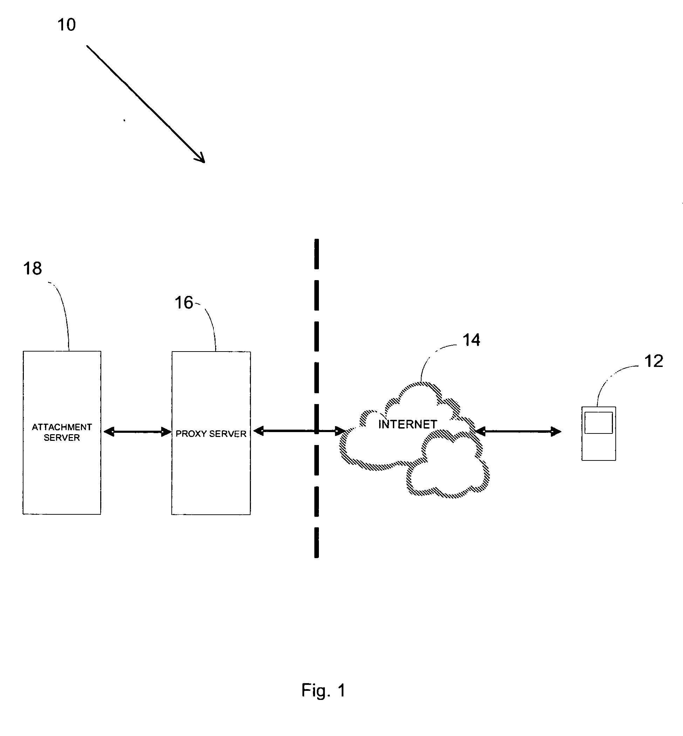

Referring now to Figure 1, a communication system 10 for a portable electronic device 12 is generally shown. The portable electronic device 12 is operable to effect communications over a radio communications channel and communicates with a base station (not shown) while located within a coverage area that is defined by the base station. The base station is part of a wireless network that is in communication with the Internet 14. Data is delivered to the portable electronic device 12 via wireless transmission from the base station. Similarly, data is sent from the portable electronic device 12 via wireless transmission to the base station.

It will be appreciated that the portable electronic device 12 is movable within the coverage area and can be moved to coverage areas defined by other base stations. Further, as will be understood by one of ordinary skill in the art, wireless networks include GSM/GPRS, CDPD, TDMA, iDEN, Mobitex, DataTAC networks, EDGE, EVDO or UMTS and broadband networks such as Bluetooth and variants of 802.11.

A server 18 handles wireless client requests from the portable electronic device 12. A firewall, or proxy server, 16, is provided between the server 18 and the Internet 14. The server 18 further operates as an Attachment Server, which communicates with an email client and an Attachment Viewer of the portable electronic device 12 to allow a user to view attachments that are received in email messages. While only one server 18 is shown for illustration purposes, a person skilled in the art will understand that the Attachment Server may alternatively be a separate server.

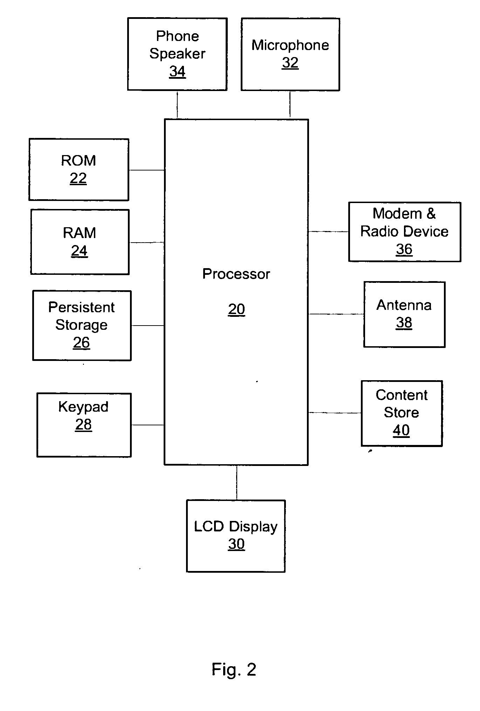

Referring now to Figure 2, a block diagram of certain components within the portable electronic device 12 is shown. In the present embodiment, the portable electronic device 12 is based on the computing environment and functionality of a wireless personal digital assistant (PDA). It will be understood, however, that the portable electronic device 12 is not limited to wireless personal digital assistants. Other portable electronic devices are possible, such as smart telephones, and laptop computers.

The portable electronic device 12 is based on a microcomputer including a processor 20 connected to a read-only-memory (ROM) 22 that contains a plurality of applications executable by the processor 20 that enables each portable electronic device 12 to perform certain functions including, for example, PIN message functions, SMS message functions and cellular telephone functions, including an Attachment Viewer application for viewing attachments to emails, such as word processing documents, spreadsheets, images, etc.. The processor 20 is also connected to a random access memory unit (RAM) 24 and a persistent storage device 26 which are responsible for various non-volatile storage functions of the portable electronic device 12. The processor 20 receives input from various input devices including a keypad 28. The processor 20 outputs to various output devices including an LCD display 30. A microphone 32 and phone speaker 34 are connected to the processor 20 for cellular telephone functions. The processor 20 is also connected to a modem and radio device 36. The modem and radio device 36 is used to connect to wireless networks and transmit and receive voice and data communications through an antenna 38. A content store 40, which is generally a file storage system for the portable electronic device 12, is also provided.

Request/view functionality for an attachment of an email message received by the portable electronic device 12 is provided by the Attachment Viewer and the Attachment Server 18.

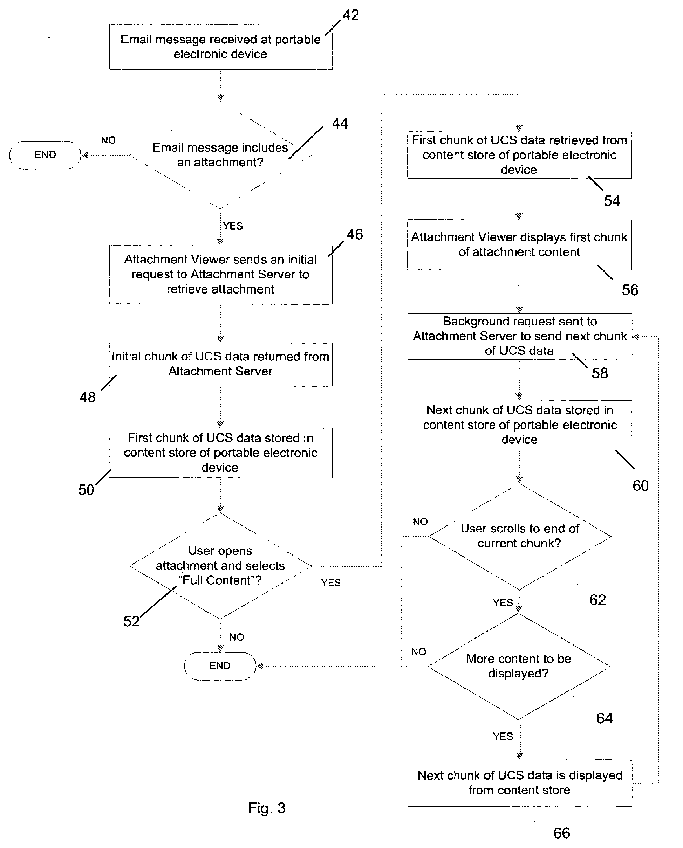

Referring to Figure 3, device-side operation of a method for downloading an attachment to an Attachment Viewer of the portable electronic device 12 is generally shown. When an email message is received by the portable electronic device 12 at step 42, the Attachment Viewer first determines whether or not the email message contains an attachment, as indicated at step 44. The Attachment Viewer is able to determine if an attachment is present by checking the email payload and searching for email components that have been marked as supported attachments. The email components are marked by an enterprise server, which communicates with Attachment Server 18.

If the email message does not include an attachment, the logic terminates. If the email message does include an attachment, the Attachment Viewer sends an initial request to the Attachment Server 18 to retrieve the attachment, as indicated at step 46. In response to the initial request, an initial chunk of data is returned to the portable electronic device 12 and is stored in the content store 40, as indicated at steps 48 and 50, respectively. Each chunk of data downloaded from the Attachment Server 18 is of a size (e.g. 16Kbyte) suitable for internal caching within the device 12 and may be provided in Universal Content Stream (UCS) format, which is an Attachment Viewer readable format.

At step 52, the user opens the attachment and selects "Full Content" from a menu in order to view the attachment in the Attachment Viewer of the portable electronic device 12. If the user does not choose to view the attachment, the logic terminates and the initial chunk of UCS data remains in the content store 40 of the portable electronic device 12 until the email message is deleted.

In response to the "Full Content" selection by the user, the initial chunk of UCS data is retrieved from the content store 40 and displayed by the Attachment Viewer, as indicated at steps 54 and 56, respectively. Upon the initial document display of the first data chunk, a background request for the second chunk is immediately issued (step 58) and data is cached (step 60). When the user action requests this data (i.e. by scrolling to the end of the first chunk), the next chunk is immediately retrieved form the persistent store 40 and presented to the user at step 66. Provided that additional attachment data remains to be downloaded from the server 18 (step 64), the background request for the subsequent next data chunk is re-issued (step 58).

It will be understood from the foregoing that each next data chunk is automatically downloaded from the server 18 and cached on the device 12 immediately upon user action (scroll) requesting the current data chunk. It will also be understood that if the user jumps in the document text such as by using a text hyperlink (a "NO" at step 62), then the chunk requested at step 58 will not necessarily be the subsequent chunk of data to be displayed. Since such a "jump" is not an implied action that can be predicted, the method terminates and the user has to wait for the target data chunk to be downloaded from the server 18. However, once displayed, the method starts again at step 58 by pre-fetching the next chunk after the target chunk being displayed.

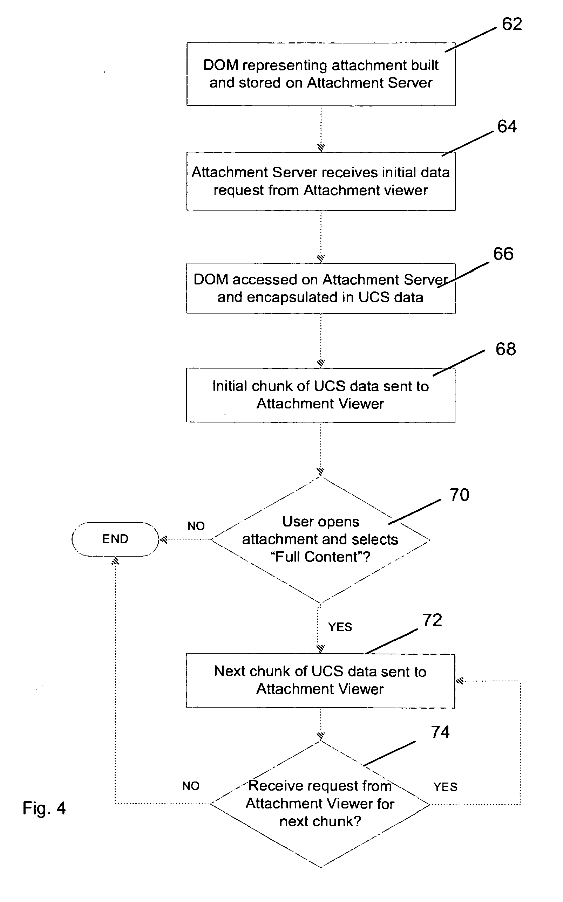

Referring to Figure 4, server-side operation of the method for downloading an attachment to an Attachment Viewer of the portable electronic device 12 is generally shown. When an email message having an attachment is received by the portable electronic device 12, as indicated at step 42 of Figure 3, the Attachment Server 18 first builds a Document Object Model (DOM) by parsing the attachment document, as indicated at step 62 of Figure 4, In this manner, a graph structure representing a map of the original attachment file is built within the Attachment Server 18. The DOM contains textual content, font, style and formatting attributes as well as layout attributes, such as page/slide size, positioning information (i.e. x, y and z coordinates on the page), embedded graphics and tables, for example. DOM structure is well known and is disclosed in United States Patent Application Nos. 2002/0161796 and 2006/0055693.

At step 64, which corresponds to step 46 of Figure 3, the initial request from the Attachment Viewer is received by the Attachment Server 18. Based on the request content, the DOM is accessed and components of the DOM are reconstructed in order to fulfill the request. The request typically includes: a screen size of the portable electronic device 12, the type of portable electronic device 12 and the requested UCS chunk size in Kilobytes. At step 66, the reconstructed DOM is encapsulated in UCS data and stored on the Attachment Server 18. An initial chunk of UCS data is then sent to the Attachment Viewer, as indicated at step 68, which corresponds to step 48 of Figure 3. The initial chunk of data contains the start of the attachment. For example, the first chunk may contain the first page or multiple pages of a document depending on how many pages can fit in the requested UCS chunk size, When the user opens the attachment and
selects "Full Content", as indicated at step 70, the second chunk of UCS data is sent to the portable electronic device 12, as indicated at step 72. Then, when the user scrolls to the end of the first chunk, the next chunk is already available in content store 40. As soon as the next chunk is displayed (corresponding to step 66 in Figure 3), the attachment viewer sends a request for the next chunk (step 58 in Figure 3), resulting in the Attachment Server 18 downloading the next data chunk (step 74).

In summary, by automatically pre-fetching and storing each next (subsequent) chunk of attachment data locally an the portable electronic device 12, the Attachment Viewer is able to display attachment content immediately upon user scrolling to the end of a current chunk of data. By the time the user has viewed each portion of the attachment defined by a chunk of data, which is contained in the initial chunk of data, the second chunk of data will have arrived at the device 12. Thus, the user is able to view the attachment document without experiencing a significant delay following the view request.

The method for downloading data to a portable electronic device 12 is not limited to downloading attachment data from an Attachment Server. Native attachment downloads, which send attachment binary data from an Enterprise Server rather than UCS data from the Attachment Server, may also be performed. Native attachment download is useful for portable electronic devices having Microsoft Office™-type programs available. Such programs are capable of displaying .doc and .ppt files, for example, using the appropriate Office-type program on the portable electronic device. Other types of data may also be downloaded using the method disclosed herein. A specific embodiment has been shown and described herein. However, modifications and variations may occur to those skilled in the art.

## Claims

1. A method for downloading data onto a portable electronic device over a wireless network, wherein the data is an attachment of an email message received by the portable electronic device, said method comprising:
a) downloading an initial chunk of said data containg the start of said attachment from a server to said portable electronic device in response to a data request sent from said portable electronic device to said server; wherein the server comprises a graph structure representing a map of said attachment and wherein the graph structure is accessed to reconstruct said chunk of said data; wherein a first data request to retrieve said attachment is sent in response to receipt of the email message by said portable electronic device;
b) storing the downloaded chunk of said data on said portable electronic device prior to display thereof;
c) displaying said stored chunk of said data on said portable electronic device;
d) while displaying said stored chunk of data automatically downloading or sending a next data request to download a respective next chunk of said data from said server in accordance with said graph structure; and
e) while data chunks of said data remain to be downloaded from said server performing steps b) to d).

2. A method as claimed in claim 1, wherein said method comprises downloading the attachment to an attachment viewer of said portable electronic device, said method comprising, prior to said downloading, the step of:
sending said first data request from said attachment viewer to said server.

3. A method as claimed in claim 2 wherein said graph structure has been previously built on said server; and the method further comprising
reconstructing said graph structure in response to said initial request and encapsulating said graph structure in data having an attachment viewer readable format, said data being stored on said server.

4. A method as claimed in claim 2 or 3, wherein said graph structure is a Document Object Model.

5. A method as claimed in claim 2, 3 or 4, wherein said attachment viewer readable format is Universal Content Stream format

6. A method as claimed in any preceding claim, wherein the method comprises downloading successive chunks of said data from said server to said attachment viewer responsive to successive user requests sent from the portable electronic device.

7. A portable electronic device, having:
a user input;
a local cache;
a display; and
an attachment viewer adapted for:
a) sending a request to download a chunk of data from a server over a wireless network; wherein the data corresponds to an attachment of an email message received by the portable electronic device; wherein the server comprises a graph structure representing a map of said attachment and wherein the graph structure is accessed to reconstruct said chunk of said data; wherein a first data request to retrieve said attachment is sent in response to receipt of the email message by said portable electronic device;
b) receiving and storing the downloaded chunk of said data in said local cache prior to display thereof;
c) displaying said stored chunk of said data on said display;
d) while displaying said stored chunk of data automatically sending a next request to download a respective next chunk of said data from said server in accordance with said graph structure; and
e) while data chunks of said data remain to be downloaded from said server performing steps b) to d).

8. A computer readable medium storing computer readable instructions executable by a processor of a computing device to cause said device to perform the steps of the method of any one of claims 1 to 6

## Patentansprüche

1. Verfahren zum Herunterladen von Daten auf eine tragbare elektronische Vorrichtung über ein drahtloses Netzwerk, wobei die Daten ein Anhang einer Email-Nachricht sind, die von der tragbaren elektronischen Vorrichtung empfangen wird, wobei das Verfahren aufweist:
a) Herunterladen eines anfänglichen Blocks von Daten, der den Beginn des Anhangs enthält, von einem Server auf die tragbare elektronische Vorrichtung in Reaktion auf eine Datenanforderung, die von der tragbaren elektronischen Vorrichtung an den Server gesendet wird, wobei der Server eine Graph-Struktur aufweist, die eine Abbildung des Anhangs repräsentiert, und wobei auf die Graph-Struktur zugegriffen wird, um den Datenblock zu rekonstruieren; wobei eine erste Datenanforderung zum Abrufen des Anhangs gesendet wird in Reaktion auf einen Empfang der Email-Nachricht von der tragbaren elektronischen Vorrichtung;
b) Speichern des heruntergeladenen Datenblocks vor dessen Anzeige auf der tragbaren elektronischen Vorrichtung;
c) Anzeigen des gespeicherten Datenblocks auf der tragbaren elektronischen Vorrichtung;
d) während der Anzeige des gespeicherten Datenblocks, automatisches Herunterladen oder Senden einer nächsten Datenanforderung zum Herunterladen eines jeweiligen nächsten Blocks von Daten von dem Server in Übereinstimmung mit der Graph-Struktur; und
e) so lange Datenblöcke der Daten zum Herunterladen von dem Server verbleiben, Durchführen der Schritte b) bis d).

2. Verfahren gemäß Anspruch 1, wobei das Verfahren aufweist ein Herunterladen des Anhangs in einen Anhang-Betrachter der tragbaren elektronischen Vorrichtung, wobei das Verfahren vor dem Herunterladen den Schritt aufweist:
Senden der ersten Datenanforderung von dem Anhang-Betrachter an den Server.

3. Verfahren gemäß Anspruch 2, wobei die Graph-Struktur zuvor auf dem Server eingerichtet wurde; und wobei das Verfahren weiter aufweist Rekonstruieren der Graph-Struktur in Reaktion auf die anfängliche Anforderung und Einkapseln der Graph-Struktur in Daten, die ein Format haben, das der Anhang-Betrachter lesen kann, wobei die Daten auf dem Server gespeichert sind.

4. Verfahren gemäß Anspruch 2 oder 3, wobei die Graph-Struktur ein Dokumentobjektmodell ist.

5. Verfahren gemäß Anspruch 2, 3 oder 4, wobei das durch den Anhang-Betrachter lesbare Format das "Universal Content Stream"-Format ist.

6. Verfahren gemäß einem vorhergehenden Anspruch, wobei das Verfahren aufweist ein Herunterladen aufeinanderfolgender Blöcke von Daten von dem Server an den Anhang-Betrachter in Reaktion auf aufeinanderfolgende Benutzeranforderungen, die von der tragbaren elektronischen Vorrichtung gesendet werden.

7. Tragbare elektronische Vorrichtung, die aufweist:
eine Benutzereingabeeinrichtung;
einen lokalen Cachespeicher;
eine Anzeige; und
einen Anhang-Betrachter, der ausgebildet ist zum:
a) Senden einer Anforderung zum Herunterladen eines Blocks von Daten von einem Server über ein drahtloses Netzwerk; wobei die Daten einem Anhang einer Email-Nachricht entsprechen, die von der tragbaren elektronischen Vorrichtung empfangen wird; wobei der Server eine Graph-Struktur aufweist, die eine Abbildung des Anhangs repräsentiert, und wobei auf die Graph-Struktur zugegriffen wird, um den Datenblock zu rekonstruieren; wobei eine erste Datenanforderung zum Abrufen des Anhangs gesendet wird in Reaktion auf einen Empfang der Email-Nachricht von der tragbaren elektronischen Vorrichtung;
b) Empfangen und Speichern des heruntergeladenen Datenblocks in dem lokalen Cachespeicher vor dessen Anzeige;
c) Anzeigen des gespeicherten Datenblocks auf der Anzeige;
d) während der Anzeige des gespeicherten Datenblocks, automatisches Senden einer nächsten Anforderung zum Herunterladen eines jeweiligen nächsten Blocks von Daten von dem Server in Übereinstimmung mit der Graph-Struktur; und
e) so lange Datenblöcke der Daten zum Herunterladen von dem Server verbleiben, Durchführen der Schritte b) bis d).

8. Computerlesbares Medium, das computerlesbare Anweisungen speichert, die durch einen Prozessor einer Computervorrichtung ausgeführt werden können, um die Vorrichtung zu veranlassen, die Schritte des Verfahrens gemäß einem der Ansprüche 1 bis 6 durchzuführen.

## Revendications

1. Procédé de téléchargement de données sur un dispositif électronique portatif via un réseau sans fil, dans lequel les données constituent une pièce jointe à un message de courriel reçu par le dispositif électronique portatif, ledit procédé comprenant les étapes consistant à :
a) télécharger un segment initial desdites données, contenant le début de ladite pièce jointe, entre un serveur et ledit dispositif électronique portatif, en réponse à une demande de données envoyée par ledit dispositif électronique portatif audit serveur ; dans lequel le serveur comprend une structure de graphe représentant la topographie de ladite pièce jointe et dans lequel un accès est fait à la structure de graphe pour reconstruire ledit segment desdites données ; dans lequel une première demande de données en vue d'obtenir ladite pièce jointe est envoyée en réponse à la réception du message de courriel par ledit dispositif électronique portatif ;
b) mémoriser le segment téléchargé desdites données sur ledit dispositif électronique portatif avant son affichage ;
c) afficher ledit segment mémorisé desdites données sur ledit dispositif électronique portatif ;
d) tout en affichant ledit segment mémorisé de données, télécharger automatiquement ou envoyer une demande de données suivantes, afin de télécharger à partir du serveur un segment suivant respectif desdites données, selon ladite structure de graphe ; et
e) tant que des segments de données restent à télécharger sur ledit serveur, exécuter les étapes b) à d).

2. Procédé selon la revendication 1, dans lequel ledit procédé comprend l'étape consistant à télécharger la pièce jointe vers un visualisateur de pièces jointes dudit dispositif électronique portatif, ledit procédé comprenant, avant ladite étape de téléchargement, l'étape consistant à :
envoyer ladite première demande de données entre ledit visualisateur de pièces jointes et ledit serveur.

3. Procédé selon la revendication 2, dans lequel ladite structure de graphe a été construite au préalable sur ledit serveur et le procédé comprend en outre les étapes consistant à :
reconstruire ladite structure de graphe en réponse à ladite demande initiale et encapsuler ladite structure de graphe dans des données ayant un format lisible par un visualisateur de pièces jointes, lesdites données étant stockées sur ledit serveur.

4. Procédé selon la revendication 2 ou 3, dans lequel ladite structure de graphe est un modèle d'objet de document (*Document Object Model*).

5. Procédé selon la revendication 2, 3 ou 4, dans lequel ledit format lisible par un visualisateur de pièces jointes est le format de flux universel de contenu (*Universal Content Stream*).

6. Procédé selon l'une quelconque des revendications précédentes, dans lequel le procédé comprend le téléchargement de segments successifs de données entre ledit serveur et ledit visualisateur de pièces jointes, en réponse à des demandes successives de l'utilisateur, envoyées par le dispositif électronique portatif.

7. Dispositif électronique portatif, comprenant :
une entrée d'utilisateur ;
une antémémoire locale ;
un écran d'affichage ; et
un visualisateur de pièces jointes, conçu pour :
a) envoyer une demande pour télécharger un segment de données en provenance d'un serveur sur un réseau sans fil ; dans lequel les données correspondent à une pièce jointe à un message de courriel reçu par le dispositif électronique portatif ; dans lequel le serveur comprend une structure de graphe représentant une topographie de ladite pièce jointe et dans lequel un accès est fait à la structure de graphe pour reconstruire ledit segment desdites données ; dans lequel une première demande de données en vue d'obtenir ladite pièce jointe est envoyée en réponse à la réception du message de courriel par ledit dispositif électronique portatif ;
b) recevoir et mémoriser le segment téléchargé desdites données dans ladite antémémoire locale avant son affichage ;
c) afficher ledit segment mémorisé desdites données sur ledit écran d'affichage ;
d) tout en affichant ledit segment mémorisé de données, envoyer automatiquement une demande de données suivantes, afin de télécharger à partir dudit serveur un segment suivant respectif desdites données, selon ladite structure de graphe ; et
e) tant que des segments de données restent à télécharger sur ledit serveur, exécuter les étapes b) à d).

8. Support lisible par ordinateur, portant des instructions lisibles par ordinateur qui peuvent être exécutées par un processeur d'un dispositif informatique afin de commander audit dispositif d'exécuter les étapes du procédé selon l'une quelconque des revendications 1 à 6.
